Europäisches Patentamt

European Patent Office

Office européen des brevets

(19)

(11) Veröffentlichungsnummer: **0 170 274**

**A2**

(12) **EUROPÄISCHE PATENTANMELDUNG**

(21) Anmeldenummer: **85109611.5**

(22) Anmeldetag: **31.07.85**

(51) Int. Cl.⁴: **G 02 B 6/38**

(30) Priorität: **03.08.84 DE 8423218 U**

(43) Veröffentlichungstag der Anmeldung:
**05.02.86 Patentblatt 86/6**

(84) Benannte Vertragsstaaten:
**CH DE FR GB LI**

(71) Anmelder: **Siemens Aktiengesellschaft**
**Berlin und München Wittelsbacherplatz 2**
**D-8000 München 2(DE)**

(72) Erfinder: **Schwarz, Johann, Dipl.-Ing. (FH)**
**Kafkastrasse 60**
**D-8000 München 83(DE)**

(54) **Gerät zum Reinigen von Lichtwellenleitersteckverbindungsteilen.**

(57) Ein stabförmiger Körper weist an seinen beiden Enden jeweils einen aus dem Körper vorstehenden Reinigungsdocht auf, der einerseits aus einem stiftförmigen Körperende hervorragt, andererseits in einem hohlzylindrisch geformten körperende geführt und um einen Freirand dieses Körperendes herumgebogen ist. Das eine Ende kann unter Stauchung des vorstehenden Dochtes in buchsenförmige LWL-Steckverbinderteile eingeführt werden und dient daher zur Reinigung von in Vertiefungen endenden LWL-Stirnseiten, während in das hohlzylindrisch geformte Körperende bei geeigneter Bemessung ein stiftförmiger LWL-Steckverbinderteil zur Reinigung eingesteckt und darin gedreht werden kann, wobei neben der Außenfläche des stiftförmigen Steckverbinderteiles zugleich ein Lichtwellenleiterstirnfläche am freien Ende des Steckverbinderteiles gereinigt wird.

FIG 1

FIG 2

FIG 3

EP 0 170 274 A2

Siemens Aktiengesellschaft       Unser Zeichen 0170274
Berlin und München               VPA 84 P 1572. E

Gerät zum Reinigen von Lichtwellenleitersteckverbindungsteilen

Die Erfindung bezieht sich auf ein Gerät zum Reinigen von Lichtwellenleitersteckverbindungs-Teilen, bei dem an einem Ende eines stabförmigen Körpers ein in einer Höhlung des Körpers gelagerter und in einem stiftförmigen Abschnitt des Körpers geführter Docht aus glasfaserverträglichem Material mit einem freien Ende derart aus dem Körper herausgeführt ist, daß das aus dem Körper vorstehende freie Ende des Dochtes zu einem Reinigungspfropfen stauchbar ist.

Ein solches Gerät ist aus der DE-OS 31 46 080 bekannt. Dieses bekannte Gerät kann vorteilhaft dazu verwendet werden, um in Vertiefungen, insbesondere von buchsenförmig endenden LWL-Steckverbindungsteilen, liegende LWL-Stirnseiten zu reinigen. Bei geeigneter Bemessung des Körperendes, aus dem der Docht hervorsteht, kann nämlich dieses Körperende zusammen mit dem Docht, der dabei gestaucht wird, in die z.B. durch eine Buchse gebildete Vertiefung eingeführt und etwa durch eine zwirbelnde Drehbewegung unter leichtem achsialem Druck gedreht werden, so daß das gestauchte Dochtende über eine LWL-Stirnseite, die sich am Boden der Vertiefung befindet, hinweggleitet und dabei dieses Ende von Staub und/oder Schmutzpartikeln befreit. Ist das Dochtende verschmutzt, so kann es durch Ziehen am Docht weiter aus dem Körper herausgezogen und in entsprechender Länge abgeschnitten werden, wodurch ein neues sauberes Dochtende zur Verfügung steht.

Rt 1 Ktz / 2.08.1984

Das bekannte Gerät ist jedoch nicht ohne weiteres geeignet, um z.B. LWL-Stirnseiten zu reinigen, die sich am freien Ende eines stiftförmigen Steckverbinderteiles befinden.

Aufgabe vorliegender Erfindung ist es daher, ein Gerät der eingangs genannten Art so weiterzubilden, daß es auch unkompliziert zur Reinigung vorstehend erwähnter LWL-Stirnseiten geeignet ist.

Erfindungsgemäß ergibt sich die Lösung dieser Aufgabe dadurch, daß der Körper an seinem anderen Ende einen frei endenden hohlzylindrischen Bereich aufweist, und daß ein weiterer im Körper gelagerter Docht den hohlzylindrischen Bereich mit Spiel durchsetzt und mit seinem freien Ende um einen Freirand des hohlzylindrischen Bereichs herumgebogen ist.

Bei geeigneter Bemessung des hohlzylindrischen Bereiches des stabförmigen Körpers verbleibt zwischen dem durch diesen Bereich geführten Dochtabschnitt und der Wand des hohlzylindrischen Bereichs soviel Freiraum, daß zwischen Docht und Wand des hohlzylindrischen Bereiches ein stiftförmiges Ende einer Lichtwellenleitersteckverbindung eingeführt werden kann. Wird das stiftförmige Steckverbinderteil in dem hohlzylindrischen Bereich gedreht, so gleitet der Docht über die Außenfläche des stiftförmigen Steckverbinderteiles und befreit diesen von aufliegenden Staubpartikeln und/oder aufliegenden Schmutzschichten. Zugleich wird dabei eine am freien Ende des stiftförmigen Steckverbinderteils befindliche LWL-Stirnseite gesäubert.

Die Säuberung einer LWL-Stirnseite am freien Ende eines stiftförmigen Steckverbinderteils wird noch verbessert, wenn der hohlzylindrische Bereich durch einen rechtwinklig zur Achse des stabförmigen Körpers verlaufenden Boden begrenzt ist und der Docht durch eine zentrale
Öffnung des Bodens in den hohlzylindrischen Bereich
geführt ist.

In weiterer Ausgestaltung der Erfindung kann noch vorgesehen sein, daß der stabförmige Körper an seinen beiden
Enden mit dem Körper verrastbare Kappen aufweist, die
die freiliegenden Dochtenden überdecken und daß an dem
stabförmigen Körper ein Halteklips angeformt ist.

Auf diese Weise werden die freiliegenden Dochtenden vor
einer unerwünschten Verschmutzung geschützt und bewirkt,
daß das Gerät wie ein Füllfederhalter oder Drehbleistift
in der Tasche eines Bekleidungsstückes unkompliziert
mitgeführt werden kann.

Nachfolgend wird ein Ausführungsbeispiel der Erfindung anhand von drei Fig. noch näher erläutert.

Dabei zeigen, vergrößert, teilweise im Schnitt,

Fig. 1 das Gerät mit an beiden Enden aufgesetzten Kappen
        in Seitenansicht,

Fig. 2 einen Längsschnitt durch das Gerät und

Fig. 3 in Schrägsicht das Zusammenwirken eines stiftförmigen Steckverbinderteiles mit dem zu seiner
        Reinigung vorgesehenen Ende des Gerätes, wobei
        zur besseren Verdeutlichung der Lage des Reinigungsdochtes der hohlzylindrische Bereich des
        stabförmigen Körpers teilweise abgetragen dargestellt ist.

Im einzelnen ist den Figuren zu entnehmen, daß ein stabförmiger Körper 1 mit einer zylindrischen Außenkontur eine innere Höhlung 5 aufweist, in der zueinander gegenläufig zwei Dochte 4, die z.B. aus Lederstreifen bestehen, gelagert sind. An den beiden Enden des stabförmigen Körpers 1 ist jeweils einer der beiden Dochte 4 durch eine Öffnung 6, durch die ein Docht 4 nur unter Überwindung eines gewissen Reibungswiderstandes hindurchgezogen werden kann, aus dem Körper 1 herausgeführt.

Am einen Ende des Körpers 1 wird der Docht 4 von einem hülsenförmigen Ende 7 des Körpers 1 bzw. eines mit dem Körper verschraubbaren Ansatzes 2 umschlossen und steht aus diesem Ansatz 2 etwas vor. Dadurch kann das Gerät auf dieser Seite, wie bekannt, mit dem vorstehenden Dochtende 8 z.B. in die durch ein buchsenförmiges Steckverbinder- ,teil gebildete Vertiefung eingeführt werden, an deren Boden sich eine LWL-Stirnseite befindet.

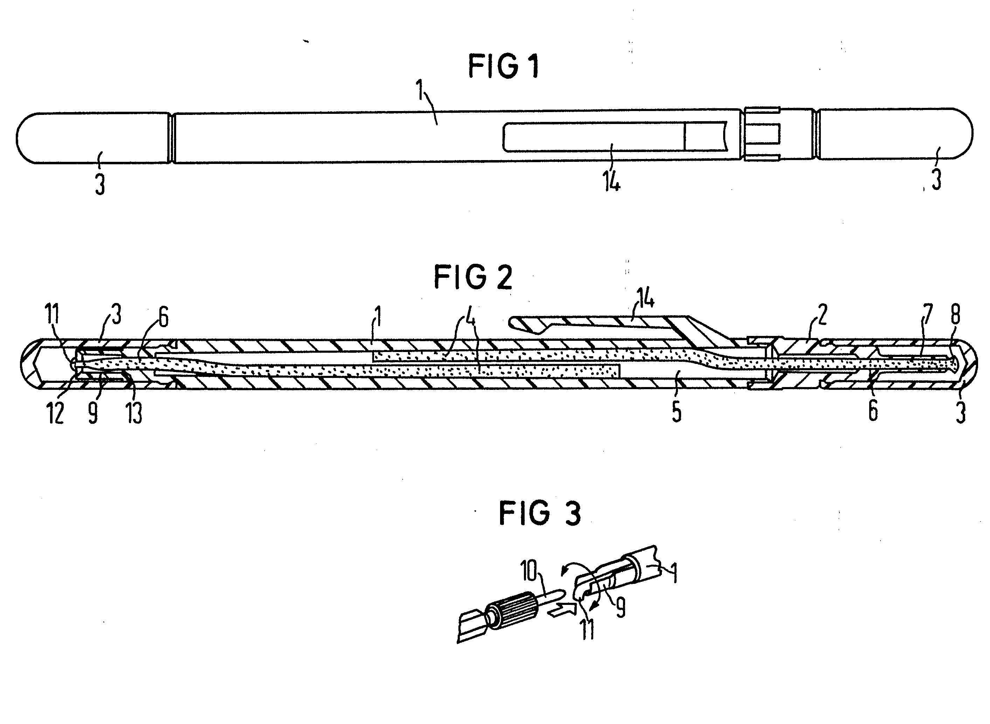

Am anderen Ende des Körpers 1 ist der Körper auf der vom Hohlraum 5 abgewandten Seite der Öffnung 6 hohlzylindrisch ausgebildet. In diesem hohlzylindrischen Bereich 9 ist der Docht 4 mit Spiel geführt, so daß, wie insbesondere Fig. 3 zeigt, ein stiftförmiges Ende 10 eines LWL-Steckverbinderteiles zusätzlich zu dem Docht 4 in den von dem hohlzylindrichen Bereich 9 umschlossenen Raum eingeführt werden kann. Um dabei ein Zurückgleiten des Dochtes 9 zu verhindern, ist der Docht 9 mit seinem freien Ende 11 um einen Freirand 12 des hohlzylindrischen Bereiches 9 herumgebogen. Da die Öffnung 6 konzentrisch zum hohlzylindrischen Bereich 9 vorgesehen ist, wird der Docht 4 beim Einführen des stiftförmigen Teiles 10 in den hohlzylindrischen Bereich 9 auf der Seite des hohlzylindrischen Bereiches 9 der Öffnung 6 zwangsläufig gegen den Boden 13 gedrückt, der die Öffnung 6 umgibt. Dadurch legt sich dieser Dochtabschnitt gegen eine LWL-Stirnseite, die in dem stiftförmigen Teil 10 endet und befreit diese von etwa anhaftendem Schmutz.

Verschmutzte Teile des Dochtes können durch Herausziehen eines entsprechenden Dochtabschnittes aus dem Körper 1 und nachfolgendes Abschneiden der verschmutzen Dochtteile unkompliziert entfernt werden. An beiden Enden des Körpers 1 sind auf den Körper 1 bzw. den Ansatz 2 aufschnappbare Kappen 3 vorgesehen, die die Reinigungsteile des Körpers 1 vor einer Verschmutzung sichern. Außerdem ist an dem Körper 1 ein Halteklips 14 angeformt, der es ermöglicht, das Gerät wie einen Füllfederhalter oder Drehbleistift am Rand einer Bekleidungstasche festzuklemmen.

4 Patentansprüche

3 Figuren

<u>Patentansprüche</u>

1. Gerät zum Reinigen von Lichtwellenleitersteckverbindungs-Teilen, bei dem an einem Ende eines stabförmigen Körpers ein in einer Höhlung des Körpers gelagerter und in einem stiftförmigen Abschnitt des Körpers geführter Docht aus glasfaserverträglichem Material mit einem freien Ende derart aus dem Körper herausgeführt ist, daß das aus dem Körper vorstehende freie Ende des Dochtes zu einem Reinigungspfropfen stauchbar ist, d a d u r c h   g e k e n n z e i c h n e t, daß der Körper an seinem anderen Ende einen frei endenden hohlzylindrischen Bereich aufweist, und daß ein weiterer im Körper gelagerter Docht den hohlzylindrischen Bereich mit Spiel durchsetzt und mit seinem freien Ende um einen Freirand des hohlzylindrischen Bereichs herumgebogen ist.

2. Gerät nach Anspruch 1, d a d u r c h   g e k e n n z e i c h n e t, daß der hohlzylindrische Bereich durch einen rechtwinklig zur Achse des stabförmigen Körpers verlaufenden Boden begrenzt ist und daß der Docht durch eine zentrale Öffnung des Bodens in den hohlzylinderischen Bereich geführt ist.

3. Gerät nach einem der Ansprüche 1 oder 2, d a d u r c h   g e k e n n z e i c h n e t, daß der stabförmige Körper an seinen beiden Enden mit dem Körper verrastbare Kappen aufweist, die die freiliegenden Dochtenden überdecken.

4. Gerät nach einem der vorhergehenden Ansprüche, d a d u r c h   g e k e n n z e i c h n e t, daß an dem stabförmigen Körper ein Halteklips angeformt ist.

# FIG 1

1

3          14          3

# FIG 2

11  3  6        1    4        14              2      7  8

12 9 13                  5              6  3

# FIG 3

10          1

11    9

1/1

0170274